# EUROPÄISCHE PATENTSCHRIFT

(11) **EP 3 463 957 B1**
(45) Veröffentlichungstag und Bekanntmachung des Hinweises auf die Patenterteilung: **25.10.2023**
(21) Anmeldenummer: 17726307.6
(22) Anmeldetag: 29.05.2017
(51) Int. Cl.: B60L 15/00, B60L 3/00, B61C 3/00, B61C 17/04

(54) **ELEKTRISCHES SYSTEM EINES SCHIENENFAHRZEUGS, SCHIENENFAHRZEUG UND VERFAHREN ZUM BETRIEB EINES ELEKTRISCHEN SYSTEMS**
ELECTRICAL SYSTEM OF A RAIL VEHICLE, RAIL VEHICLE AND METHOD FOR OPERATING AN ELECTRICAL SYSTEM
SYSTÈME ÉLECTRIQUE D'UN VÉHICULE FERROVIAIRE, VÉHICULE FERROVIAIRE ET PROCÉDÉ POUR FAIRE FONCTIONNER UN SYSTÈME ÉLECTRIQUE

(30) Priorität: 01.06.2016 DE 102016209553
(43) Veröffentlichungstag der Anmeldung: 10.04.2019
(73) Patentinhaber: ALSTOM Holdings, 93400 Saint-Ouen-sur-Seine (FR)
(72) Erfinder: FALKE, Ewald, 9000 St. Gallen (CH); RICKERMANN, André, 5600 Lenzburg (CH)
(74) Vertreter: Patentanwälte Bressel und Partner mbB
(86) Internationale Anmeldenummer: PCT/EP2017/062910
(87) Internationale Veröffentlichungsnummer: WO 2017/207498

(56) Entgegenhaltungen:
- EP-A1- 0 514 580
- EP-A1- 1 958 843
- WO-A2-2012/098107
- DE-A1-102009 008 549
- KARL-GERHARD BAUR: "3: Der elektrische Teil der Baureihe 101", 30 September 2013 (2013-09-30), BAUREIHE 101: DIE INTERCITY LOKOMOTIVE DER DEUTSCHEN BAHN - EINE DER WICHTIGSTEN E-LOKS DER EISENBAHN GEGENWART MIT TECHNISCHEN ZEICHNUNGEN, GERAMOND VERLAG GMBH, PAGE(S) 51 - 68, XP009531003, ISBN: 978-3-86245-188-3

## Beschreibung

Die Erfindung betrifft ein Schienenfahrzeug sowie ein Verfahren zum Betrieb des elektrischen Systems.

Aus der WO 2007/031245 A1 ist eine Lokomotive mit mehreren Exemplaren von Stromrichtern bekannt, wobei diese durch einen Mittelgang getrennt sein können, durch den eine Person hindurch gehen kann.

Die EP 0 514 580 A1 offenbart eine Umrichteranordnung.

Die EP 1 958 843 A1 offenbart ein Verfahren zur Herstellung einer Lokomotive.

Die DE 10 2009 008 549 A1 offenbart eine Anordnung zum Betreiben von Verbrauchern in einem Schienenfahrzeug mit elektrischer Energie, wobei die Anordnung wahlweise von einem Energieversorgungsnetz oder von einer Motor-Generator-Kombination mit elektrischer Energie versorgbar ist bzw. versorgt wird.

Das Dokument Karl-Gerhard Baur: "3: Der elektrische Teil der Baureihe 101", (2013-09-30), Baureihe 101: Die Intercity Lokomotive der Deutschen Bahn - eine der wichtigsten E-Loks der Eisenbahn Gegenwart mit technischen Zeichnungen, Geramond Verlag GmbH, Seiten 51-68, XP009531003, ISBN: 978-3-86245-188-3 beschreibt eine Stromrichteraufbau mit einem Saugkreis.

Problematisch ist, dass bei einer derartigen Lokomotive Betriebsszenarien auftreten können, in denen mindestens einer der Stromrichter nicht mehr die gewünschte Funktionalität aufweist. So kann beispielsweise ein Netzstromrichter oder ein Motorumrichter des Stromrichters ausfallen.

Es ist wünschenswert, bei solchen Betriebsszenarien die unerwünschte Reduktion der Funktionsfähigkeit des Schienenfahrzeugs zu minimieren. Insbesondere ist es wünschenswert, dass eine maximale Zugkraft in solchen Betriebsszenarien nicht reduziert wird. Weiter ist es wünschenswert, eine solche Minimierung zu ermöglichen, wobei ein Bauraumbedarf für eine entsprechende Lösung minimiert wird. Insbesondere soll eine verbesserte Funktionalität, insbesondere in dem vorhergehend erläuterten Fehlerfall, ohne oder nur minimale zusätzliche Bauraumanforderungen bereitgestellt werden.

Die Lösung des technischen Problems ergibt sich durch die Gegenstände mit den Merkmalen der Ansprüche 1 und 10. Es stellt sich somit das technische Problem, ein elektrisches System eines Schienenfahrzeugs, ein Schienenfahrzeug sowie ein Verfahren zum Betrieb des elektrischen Systems zu schaffen, welche eine verbesserte Funktionalität des Schienenfahrzeugs unter Minimierung der hierfür erforderlichen Bauraumanforderungen ermöglicht.

Vorgeschlagen wird ein elektrisches System eines Schienenfahrzeugs, wobei das Schienenfahrzeug ein elektrisches System aufweist. Das elektrische System kann hierbei einen Teil eines Traktionssystems des Schienenfahrzeugs ausbilden. Das elektrische System kann auch als Anordnung von elektrischen Bauteilen des Schienenfahrzeugs bezeichnet werden.

Das elektrische System kann insbesondere ein elektrisches System einer Lokomotive sein. Hierunter kann ein Schienenfahrzeug verstanden werden, das insbesondere einen Zugverband mit einer Vielzahl von Wagen im Zugbetrieb oder Schubbetrieb bewegen kann. Die Lokomotive kann Einrichtungen aufweisen, die die Lokomotive von Personenwagen und Güterwagen unterscheidet, z.B. zumindest einen Führerraum und/oder andere Einrichtungen, die einen Betrieb der Lokomotive und/oder des Zugverbandes ermöglichen.

Unter einer Lokomotive kann auch ein Triebkopf für ein Schienenfahrzeug-Zugverband verstanden werden.

Die Lokomotive kann einen Maschinenraum aufweisen, in dem ein oder mehrere Antriebsaggregat(e), insbesondere elektrische Maschinen, und Hilfsbetrieb(e) angeordnet sein können.

Das elektrische System umfasst einen ersten Stromrichter, mindestens einen weiteren Stromrichter und mindestens einen Transformator.

Der Transformator kann hierbei mindestens eine Primärwicklung aufweisen, wobei die Primärwicklung beispielsweise mit einer Versorgungsspannung, insbesondere einer Netzspannung, elektrisch verbindbar ist. Die Versorgungsspannung kann z.B. über eine Fahrleitung bereitgestellt werden. Diese kann beispielsweise durch einen Stromabnehmer kontaktieren werden. Somit kann die Primärwicklung mit dem Stromabnehmer elektrisch verbunden oder verbindbar sein. Weiter kann der Transformator mindestens eine, vorzugsweise mehrere, Sekundärwicklung(en) aufweisen. Vorzugsweise weist der Transformator eine, vorzugsweise mehrere, Sekundärwicklung(en) pro Stromrichter auf.

Die Bauteile des Transformators, insbesondere die Primärwicklung und die mindestens eine Sekundärwicklung, sind in einem Transformatorgehäuse angeordnet. Somit umfasst das Transformatorgehäuse die Elemente des Transformators. In dem Transformatorgehäuse, zumindest in einem Teilbereich davon, kann weiter Transformatoröl angeordnet sein.

Ein Stromrichter kann hierbei eine Einrichtung bezeichnen, mittels derer der Transformator und weitere elektrische Einrichtungen des Schienenfahrzeugs verbunden sind. Weitere elektrische Einrichtungen können beispielsweise elektrische Antriebsmaschinen und Hilfsbetriebseinrichtungen, beispielsweise Einrichtungen eines Lüftungs- und/oder Beleuchtungssystems, sein.

Ein Stromrichter kann hierbei eine oder mehrere der folgenden Bauteile umfassen:
- mindestens einen Netzstromrichter,
- mindestens einen Antriebsstromrichter,
- mindestens eine Bremsstellereinrichtung,
- mindestens einen Hilfsbetriebsumrichter,
- mindestens eine Schalteinrichtung zum Trennen oder Wechseln von elektrischen Verbindungen des Stromrichters,
- mindestens eine Zwischenkreiskapazität,
- mindestens eine Filtereinrichtung,
- mindestens einen Entladewiderstand.

Die Bauteile des Stromrichters können auch als funktionelle Teileinrichtungen des Stromrichters bezeichnet werden. Die Bauteile können in einer gewünschten Weise miteinander elektrisch verbunden sein.

Weiter kann der Stromrichter mindestens einen Anschluss zur Verbindung mit einer Sekundärwicklung des Transformators aufweisen. Vorzugsweise weist ein Stromrichter mehrere, beispielsweise zwei, Anschlüsse zur Verbindung mit mehreren Sekundärwicklungen des Transformators auf.

Weiter kann ein Stromrichter einen Anschluss für eine externe Energiespeichereinrichtung, beispielsweise einen Akkumulator oder eine Batterie aufweisen.

Weiter kann ein Stromrichter einen Anschluss für eine externe generatorische Einrichtung, beispielsweise einen Generator, aufweisen.

Weiter kann der Stromrichter mindestens einen Anschluss für eine elektrische Maschine, insbesondere eine Antriebsmaschine, aufweisen.

Weiter kann der Stromrichter einen Anschluss für mindestens eine Hilfsbetriebeinrichtung aufweisen.

Weiter weist ein Stromrichter einen Zwischenkreisabschnitt auf. Der Zwischenkreisabschnitt kann einen Gleichspannungsabschnitt im Stromrichter bezeichnen. Beispielsweise kann ein Zwischenkreisabschnitt das elektrische Teilsystem des Stromrichters bezeichnen, der Gleichspannungsanschlüsse eines Netzstromrichters mit Gleichspannungsanschlüssen eines Antriebsstromrichters verbindet.

Der Zwischenkreisabschnitt kann insbesondere die Zwischenkreiskapazität, die beispielsweise als Zwischenkreiskondensator ausgebildet sein kann, umfassen. Im Zwischenkreis kann eine Zwischenkreisspannung bereitgestellt werden. Diese Zwischenkreisspannung kann beispielsweise die über der Zwischenkreiskapazität abfallende Spannung bezeichnen.

Weiter ist ein Zwischenkreisabschnitt des ersten Stromrichters mit einem Zwischenkreisabschnitt des mindestens einen weiteren Stromrichters durch mindestens eine elektrische Zwischenkreisverbindung elektrisch verbindbar. Dies kann bedeuten, dass eine elektrische Verbindung zwischen den Zwischenkreisabschnitten verschiedener Stromrichter hergestellt und getrennt werden kann. Zum Trennen und Verbinden kann die Zwischenkreisverbindung mindestens eine Schalteinrichtung, insbesondere eine Trennschalteinrichtung, umfassen oder aufweisen.

So ist über eine erste elektrische Zwischenkreisverbindung ein Hochvoltabschnitt des Zwischenkreisabschnitts des ersten Stromrichters mit einem Hochvoltabschnitt des Zwischenkreisabschnitts des mindestens einen weiteren Stromrichters verbindbar, wobei über eine weitere elektrische Zwischenkreisverbindung ein Niedervoltabschnitt des Zwischenkreisabschnitts des ersten Stromrichters mit einem Niedervoltabschnitt des Zwischenkreises des mindestens einen weiteren Stromrichters verbindbar oder verbunden ist. Die erste oder weitere elektrische Zwischenkreisverbindung kann hierbei eine Schalteinrichtung zum Herstellen oder Trennen der elektrischen Verbindung aufweisen.

Ein Hochvoltabschnitt berechnet hierbei einen Abschnitt des Zwischenkreisabschnittes, der höheres elektrisches Potential als der Niedervoltabschnitt aufweist. Beispielsweise können ein erster Anschluss der Zwischenkreiskapazität mit dem Hochvoltabschnitt und ein zweiter Anschluss der Zwischenkreiskapazität mit dem Niedervoltabschnitt verbunden sein.

Erfindungsgemäß ist zumindest ein Teil der elektrischen Zwischenkreisverbindung durch ein Transformatorgehäuse geführt. Dies kann in einer erfindungsgemäßen Alternative bedeuten, dass zumindest ein Teil der elektrischen Zwischenkreisverbindung in dem Transformatorgehäuse angeordnet ist/verläuft.

Insbesondere kann eine Zwischenkreisverbindung einen oder mehrere stromrichterinternen Teil(e) und einen transformatorinternen Teil umfassen. Hierbei sind stromrichterinterne Teile in einem Gehäuse eines Stromrichters angeordnet. Der transformatorinterne Teil ist in dem Transformatorgehäuse angeordnet bzw. durch das Transformatorgehäuse geführt.

Auch kann die Zwischenkreisverbindung einen oder mehrere Teil(e) umfassen, die außerhalb eines Gehäuse des Stromrichters und außerhalb des Transformatorgehäuses angeordnet ist/sind. Insbesondere ist es aber möglich, dass der Teil der elektrischen Zwischenkreisverbindung, der außerhalb der Gehäuse der Stromrichter angeordnet ist, vollständig im Transformatorgehäuse angeordnet ist.

Es ist möglich, dass der Transformator einen Anschluss zur Verbindung des transformatorinternen Teils der Zwischenkreisverbindung mit dem Zwischenkreisabschnitt des ersten Stromrichters und mindestens einen weiteren Anschluss zur Verbindung des transformatorinternen Teils der Zwischenkreisverbindung mit dem Zwischenkreisabschnitt des mindestens einen weiteren Stromrichters aufweist.

Dass zumindest ein Teil der elektrischen Zwischenkreisverbindung durch das Transformatorgehäuse geführt wird, kann auch bedeuten, dass der zumindest eine Teil entlang einer Innenwand oder in einer weiteren erfindungsgemäßen Alternative entlang einer Außenwand des Transformatorgehäuses geführt wird.

Die elektrische Verbindung zwischen den Zwischenkreisen ermöglicht in vorteilhafter Weise, dass elektrische Leistung zwischen den Stromrichtern, insbesondere zwischen deren Zwischenkreisabschnitten, übertragen werden kann. Dies wiederum ermöglicht in vorteilhafter Weise, wie nachfolgend noch näher erläutert, eine verbesserte Funktionalität des/der Stromrichter(s) in bestimmten Betriebsszenarien, insbesondere in bestimmten Fehlerfällen.

Zusätzlich wird in vorteilhafter Weise erreicht, dass Bauraum- und Montageanforderungen für die Herstellung dieser elektrischen Verbindung minimiert werden. Insbesondere ist es nicht notwendig, eine zusätzliche elektrische Verbindung zwischen den Stromrichtern außerhalb existierender Einrichtungen im Schienenfahrzeug zu verlegen. Alternativ kann eine Länge solcher einrichtungsexterner Verbindungen minimiert werden.

In einer weiteren Ausführungsform ist zumindest ein Teil der elektrischen Zwischenkreisverbindung als Stromschiene ausgebildet. Eine Stromschiene kann aus elektrisch leitfähigem Metall, beispielsweise aus Aluminium, Kupfer oder Stahl bestehen. Eine Stromschiene kann ein biegesteifes Bauteil sein, insbesondere biegesteifer als ein elektrisches Kabel. Eine Stromschiene kann weiter als Walzprofil ausgebildet sein. Insbesondere kann der transformatorinterne Teil der Zwischenkreisverbindung als Stromschiene ausgebildet sein.

Hierdurch ergibt sich in vorteilhafter Weise eine mechanisch robuste Zwischenkreisverbindung.

In einer weiteren Ausführungsform ist zumindest ein Teil der elektrischen Zwischenkreisverbindung als Kabel ausgebildet. Hierdurch ergibt sich in vorteilhafter Weise eine flexible räumliche Anordnung oder Kabelführung der Zwischenkreisverbindung.

Es ist vorstellbar, dass ein Teil der elektrischen Zwischenkreisverbindung als Kabel und ein weiteres Teil als Stromschiene ausgebildet ist.

In einer weiteren Ausführungsform ist zumindest ein Teil, insbesondere der transformatorinterne Teil, der elektrischen Zwischenkreisverbindung elektrisch isoliert. Z.B. kann zumindest ein Teil der Zwischenkreisverbindung oder die gesamte Zwischenkreisverbindung von einer Isolationsschicht umgeben sein. Insbesondere ist die elektrische Zwischenkreisverbindung gegenüber dem Transformator, insbesondere elektrischen oder elektronischen Elementen des Transformators, elektrisch isoliert. Hierdurch wird in vorteilhafter Weise eine Betriebssicherheit des elektrischen Systems erhöht.

In einer weiteren Ausführungsform ist zumindest ein Teil der elektrischen Zwischenkreisverbindung, insbesondere der transformatorinterne Teil oder ein Abschnitt des transformatorinternen Teils, von einem Isolationsmaterial des Transformators umgeben.

Hierbei kann in dem Transformatorgehäuse zumindest ein Teilvolumen mit dem Isolationsmaterial gefüllt sein, um die elektrischen Elemente des Transformators, insbesondere die Primärwicklung und die mindestens eine Sekundärwicklung, elektrisch zu isolieren. Durch die Anordnung zumindest eines Teils der Zwischenkreisverbindung in dem Isolationsmaterial wird diese ebenfalls elektrisch gegenüber einer Umgebung isoliert.

Das Isolationsmaterial kann ein festes Material sein, z.B. Glas, Glimmer, Keramik oder Hartpapier oder aus einer Mischung von mindestens zwei dieser Materialien bestehen. Auch kann das Isolationsmaterial ein gasförmiges Material sein, z.B. ein Isolationsgas oder Isolationsgasgemisch. Auch kann das Isolationsmaterial ein flüssiges Material sein.

In einer bevorzugten Ausführungsform ist das Isolationsmaterial ein Transformatoröl. Somit ist zumindest ein Teil der elektrischen Zwischenkreisverbindung, insbesondere der transformatorinterne Teil oder ein Abschnitt des transformatorinternen Teils, von Transformatoröl des Transformators umgeben.

Hierbei kann in dem Transformatorgehäuse zumindest ein Teilvolumen mit Transformatoröl gefüllt sein, um die elektrischen Elemente des Transformators, insbesondere die Primärwicklung und die mindestens eine Sekundärwicklung, elektrisch zu isolieren und eine thermische Verbindung zur Kühlung bereitzustellen. Durch die Anordnung zumindest eines Teils der Zwischenkreisverbindung in dem Transformatoröl wird diese ebenfalls elektrisch gegenüber einer Umgebung isoliert und kann gekühlt werden.

Somit wird ein Schienenfahrzeug vorgeschlagen, wobei das Schienenfahrzeug ein elektrisches System gemäß einer der in dieser Offenbarung beschriebenen Ausführungsformen aufweist. Das Schienenfahrzeug kann insbesondere eine Lokomotive sein. Selbstverständlich kann das Schienenfahrzeug neben dem elektrischen System weitere Bestandteile des Schienenfahrzeugs umfassen.

Insbesondere kann das Schienenfahrzeug ein Hochspannungsgerüst aufweisen. Unter einem Hochspannungsgerüst kann eine Einrichtung verstanden werden, in der elektrische Bauteile und elektrische Leitungen für einen Hochspannungsteil einer Energieversorgung angeordnet sind. Das Hochspannungsgerüst kann insbesondere auch ein sogenanntes Stromrichter-Gerüst ein, wobei in diesem Fall ausschließlich oder zusätzlich Bauteile und Leitungen eines Stromrichters in dem Gerüst angeordnet sind.

Hierdurch ergibt sich in vorteilhafter Weise ein Schienenfahrzeug, welches eine verbesserte Funktionalität, insbesondere in bestimmten Fehlerfällen, aufweist, wobei gleichzeitig der zur Installation des elektrischen Systems benötigte Bauraum im Schienenfahrzeug nicht oder nur minimal erhöht wird.

Erfindungsgemäß sind der erste und der mindestens eine weitere Stromrichter zumindest entlang einer Raumrichtung beabstandet voneinander angeordnet. Die mindestens eine Raumrichtung kann insbesondere eine Richtung parallel zu einer Fahrzeugquerachse sein. Die Fahrzeugquerachse kann auch als Nickachse des Fahrzeugs bezeichnet werden. Insbesondere können auch Stromrichtergerüste bzw. die Gehäuse der Stromrichter mit den darin angeordneten Stromrichtern entlang der mindestens einen Raumrichtung beabstandet voneinander angeordnet sein.

Der Abstand kann hierbei insbesondere derart gewählt werden, dass ein Mensch zwischen den Stromrichtern hindurchgehen kann. Somit kann ein Abstand beispielsweise größer als 0,6 m sein.

Hierdurch ergibt sich in vorteilhafter Weise, dass die zur elektrischen Verbindung der Zwischenkreisabschnitte notwendige Überbrückung des Abstandes zwischen den Stromrichtern zumindest teilweise durch eine Verbindungsführung im Transformatorgehäuse erfolgt und somit keine aufwendige und bauraumbeanspruchende zusätzliche Verbindungsführung erfolgen muss.

In einer weiteren Ausführungsform weist das Schienenfahrzeug einen Mittelgang auf, wobei der Transformator unter dem Mittelgang angeordnet ist. Weiter können Stromrichter auf gegenüberliegenden Seiten des Mittelgangs angeordnet sein.

Das Schienenfahrzeug kann beispielsweise eine Bodenplatte aufweisen oder ausbilden, deren obere Oberfläche einen Boden des Mittelganges bildet. Der Transformator kann hierbei unter dieser Bodenplatte angeordnet sein. Beispielsweise kann eine Oberseite des Transformators an der Unterseite der Bodenplatte anliegen oder mit dieser mechanisch verbunden sein. Auch ist es möglich, dass der Transformator ein Unterflur-Transformator ist.

Die im Stromrichter können hierbei über der Bodenplatte angeordnet sein. Beispielsweise ist es möglich, dass die Stromrichter, insbesondere deren Gehäuse oder Gerüst, auf der Oberfläche der Bodenplatte angeordnet sind und/oder den Mittelgang einschließen.

Dass der Transformator unter dem Mittelgang angeordnet ist, kann bedeuten, dass der Transformator entlang einer Vertikalrichtung, die parallel zu einer Hochachse des Schienenfahrzeugs und von einer Unterseite zu einer Oberseite des Schienenfahrzeugs orientiert ist, unter dem Mittelgang angeordnet ist. Auch weitere Richtungsangaben wie z.B. "über" können sich auf Vertikalrichtung beziehen.

Es ist möglich, dass sich das Transformatorgehäuse von einem Bereich unter dem ersten Stromrichter zu einem Bereich unter dem weiteren Stromrichter erstreckt. Somit überbrückt das Transformatorgehäuse den Abstand zwischen den Stromrichtern.

Durch die Anordnung des Transformators unter dem Mittelgang ergibt sich in vorteilhafter Weise eine besonders platzsparende Anordnung von Bauteilen des elektrischen Systems im Schienenfahrzeug.

In einer weiteren Ausführungsform ist zwischen einem Bodenelement des Mittelgangs, beispielsweise der vorhergehend erläuterten Bodenplatte, und zwischen einer Oberseite des Transformators mindestens eine Kabelführungseinrichtung angeordnet, wobei die Kabelführungseinrichtung bündig an dem Bodenelement und bündig an der Oberseite anliegt. Die Kabelführungseinrichtung kann sich hierbei entlang oder parallel zu einer Längsachse des Schienenfahrzeugs erstrecken. Die Kabelführungseinrichtung kann insbesondere durch einen Kabelkanal ausgebildet sein.

Durch die Kabelführungseinrichtung können beispielsweise Versorgungsleitungen, beispielsweise Druckluftleitungen, und weitere Elemente, z.B. Signalverbindungselemente und elektrische Verbindungselemente, geführt werden. Durch die Durchführung der Zwischenkreisverbindung durch den Transformator wird in vorteilhafter Weise erreicht, dass eine solche Kabelführungseinrichtung baulich nicht verändert werden muss und/oder ein Verlauf der durch die Kabelführungseinrichtung geführten Verbindungselemente nicht geändert wird.

In einer weiteren Ausführungsform ist zumindest einer der Stromrichter, vorzugsweise beide oder alle Stromrichter, über dem Transformator angeordnet. Wie vorhergehend erläutert, kann dies bedeuten, dass der Stromrichter entlang der Vertikalrichtung über dem Transformator angeordnet ist. Dies schließt jedoch nicht aus, dass die Stromrichter entlang der Querrichtung versetzt zum Transformator angeordnet sind. Allerdings ist es möglich, dass nur ein Teil eines Stromrichters bzw. des Gehäuses über dem Transformator bzw. über dem Transformatorgehäuse oder einem Teil davon angeordnet ist.

Hierdurch ergibt sich in vorteilhafter Weise eine kompakte und bauraumtechnisch gut zu integrierende Anordnung im Schienenfahrzeug.

Weiter vorgeschlagen wird ein Verfahren zum Betrieb eines elektrischen Systems gemäß einer der in dieser Offenbarung beschriebenen Ausführungsformen. Hierbei wird eine elektrische Zwischenkreisverbindung hergestellt oder getrennt. Insbesondere kann das Herstellen oder Trennen der elektrischen Zwischenkreisverbindung durch Öffnen oder Schließen einer Schaltereinrichtung erfolgen.

Das Herstellen oder Trennen der elektrischen Zwischenkreisverbindung kann beispielsweise durch eine Steuereinrichtung, insbesondere eine Steuereinrichtung des Schienenfahrzeugs, gesteuert werden.

Hierdurch ergibt sich in vorteilhafter Weise, dass in bestimmten Betriebsszenarien, insbesondere in bestimmten Fehlerfällen, eine Einschränkung der Funktionalität des Schienenfahrzeugs reduziert oder gar minimiert wird. Insbesondere kann eine Reduktion der Zugkraft verhindert oder minimiert werden.

Beispielsweise kann die elektrische Zwischenkreisverbindung hergestellt werden, wenn ein vorbestimmtes Betriebsszenario, insbesondere ein bestimmter Fehlerfall, detektiert wird. Die elektrische Zwischenkreisverbindung kann getrennt werden, falls ein von dem vorbestimmten Betriebsszenario verschiedenes Betriebsszenario detektiert wird. Hierzu kann das Schienenfahrzeug oder das elektrische System mindestens ein Mittel zur Detektion eines Betriebszustandes umfassen.

In einer weiteren Ausführungsform wird die elektrische Zwischenkreisverbindung hergestellt, wenn eine Eingangsleistung eines Zwischenkreisabschnitts eines Stromrichters von einer gewünschten Eingangsleistung abweicht. Die Eingangsleistung kann beispielsweise von einer gewünschten Eingangsleistung abweichen, wenn der Netzstromrichter des Stromrichters fehlerhaft ist. Auch kann die Eingangsleistung von einer gewünschten Eingangsleistung abweichen, wenn ein Transformator, über den das elektrische System an eine Versorgungsspannung aus einem Versorgungsnetz angeschlossen ist, fehlerhaft ist. Beispielsweise kann eine Sekundärwicklung des Transformators, über die ein Stromrichter an die Versorgungsspannung angeschlossen ist, fehlerhaft sein.

Ist in einem solchen Fall die elektrische Zwischenkreisverbindung nicht hergestellt, so kann es erforderlich sein, an den Stromrichter angeschlossene Verbraucher, insbesondere elektrische Antriebsmaschinen, abzuschalten, was wiederum zu einer Reduktion der bereitstellbaren Zugkraft für das Schienenfahrzeug führen würde.

Durch die Herstellung der elektrischen Zwischenkreisverbindung kann jedoch zumindest ein Teil der gewünschten Eingangsleistung für den Zwischenkreisabschnitt über die Zwischenkreisverbindung bereitgestellt werden.

Alternativ oder kumulativ wird die elektrische Zwischenkreisverbindung hergestellt, wenn in dem Zustand einer nicht hergestellten Zwischenkreisverbindung nicht alle Zwischenkreisabschnitte der über die Zwischenkreisverbindung verbindbaren Stromrichter mit einer Energiequelle elektrisch verbunden sind.

Insbesondere kann nur der Zwischenkreisabschnitt eines Stromrichters der mindestens zwei über die Zwischenkreisverbindung verbindbaren Stromrichter mit einer Energiequelle elektrisch verbunden sein. Dass ein Zwischenkreisabschnitt nicht mit einer Energiequelle elektrisch verbunden ist, kann den Fall einschließen, dass der Zwischenkreisabschnitt nicht in einer gewünschten Weise mit einer Energiequelle verbunden sind. Es ist möglich, dass in einem solchen Fall auch die Eingangsleistung eines Zwischenkreisabschnitts eines Stromrichters von einer gewünschten Eingangsleistung abweicht.

Die Energiequelle kann insbesondere das erläuterte Versorgungsnetz sein. In diesem Fall können also nicht die Zwischenkreisabschnitte aller Stromrichter mit dem Versorgungsnetz verbunden sein, z.B. aufgrund eines fehlerhaften Netzstromrichters oder Transformators.

Alternativ kann die Energiequelle aber auch eine Energiespeichereinrichtung, z.B. ein Akkumulator, oder eine Generatoreinrichtung sein. Z.B. ist es möglich, dass die Energiequelle eine im oder am Schienenfahrzeug angeordnete Energiequelle ist. Es ist z.B. möglich, dass ein Wechselstromgenerator über den/die Netzstromrichter eines Stromrichters mit dem Zwischenkreisabschnitt des Stromrichters verbunden ist. Alternativ kann ein Wechselstromgenerator über einen von dem Netzstromrichter verschiedenen Gleichrichter eines Stromrichters mit dem Zwischenkreisabschnitt des Stromrichters verbunden sein. Alternativ oder kumulativ ist es möglich, dass eine Gleichstromquelle, z.B. ein Akkumulator, über den/die Netzstromrichter eines Stromrichters mit dem Zwischenkreisabschnitt des Stromrichters verbunden ist. Alternativ kann die Gleichstromquelle elektrisch direkt oder über einen von dem Netzstromrichter verschiedenen Gleichstromwandler mit dem Zwischenkreisabschnitt verbunden sein.

Es ist z.B. möglich, dass ein Zwischenkreisabschnitt nur eines Stromrichters der Anzahl von vorhandenen Stromrichtern elektrisch mit einer Energiespeichereinrichtung oder einer Generatoreinrichtung verbunden wird, wenn eine elektrische Verbindung dieses Stromrichters oder aller Stromrichter zu einer Versorgungsspannung aus einem Versorgungsnetz nicht herstellbar ist. Dies kann z.B. der Fall sein, wenn in einem Streckenabschnitt kein Versorgungsnetz verfügbar ist, welches durch einen Stromabnehmer kontaktiert werden kann. In diesem Fall wird also elektrische Energie nicht durch das Versorgungsnetz sondern durch die Energiespeichereinrichtung oder die Generatoreinrichtung bereitgestellt.

Um in dem Fall, dass nicht die Zwischenkreisabschnitte aller Stromrichter mit einer Energiequelle verbunden sind, eine Verteilung der Energie bzw. Leistung auf alle Zwischenkreisabschnitte zu erreichen, kann dann die Zwischenkreisverbindung hergestellt werden.

So kann beispielsweise ein Teil einer elektrischen Leistung, die von der Energiequelle in einen Zwischenkreisabschnitt eines ersten Stromrichters übertragen wird, der mit der Energiequelle verbunden ist,dann über die Zwischenkreisverbindung zu einem weiteren Zwischenkreisabschnitt eines anderen Stromrichters übertragen werden. Ohne Zwischenkreisverbindung kann es sonst erforderlich sein, die an den ersten Stromrichter angeschlossenen Verbraucher, insbesondere Antriebsmaschinen, abzuschalten, was wiederum zu einer Zugkraftreduktion führen würde.

Alternativ oder kumulativ kann die Zwischenkreisverbindung hergestellt werden, wenn die Ströme durch mindestens zwei Sekundärwicklungen des Transformators um mehr als vorbestimmtes Maß voneinander abweichen. In diesem Fall ergibt sich eine unsymmetrische Belastung der Transformatorwicklungen. Solche unsymmetrischen Belastungen können zu einer Erhöhung harmonischer Verluste und zu Störströmen führen. Störströme wiederum können eine Betriebssicherheit des Schienenfahrzeugs beeinträchtigen, insbesondere da sie sich in unerwünschter Weise auf ein Versorgungsnetz auswirken können.

Ströme durch mindestens zwei Sekundärwicklungen des Transformators können beispielsweise um mehr als ein vorbestimmtes Maß voneinander abweichen, wenn ein Motorumrichter eines Stromrichters fehlerhaft ist.

Weicht die Eingangsleistung eines Zwischenkreises eines Stromrichters nicht mehr als ein vorbestimmtes Maß von einer gewünschten Eingangsleistung ab und/oder weichen Ströme durch mindestens zwei Sekundärwicklungen nicht mehr als ein vorbestimmtes Maß voneinander ab, so kann die elektrische Zwischenkreisverbindung getrennt werden.

Hierdurch ergibt sich in vorteilhafter Weise, dass die Reduktion einer Funktionalität des Schienenfahrzeugs im Fehlerfall, insbesondere die Reduktion einer Zugkraft, minimiert oder reduziert wird.

Die Erfindung wird anhand eines Ausführungsbeispiels näher erläutert. Die Figuren zeigen:
- Fig. 1: eine perspektivische Ansicht eines elektrischen Systems,
- Fig. 2a: einen Querschnitt durch das in Fig. 1 dargestellte elektrische System,
- Fig. 2b: einen Längsschnitt durch das in Fig. 1 dargestellte elektrische System,
- Fig. 3: einen schematischen elektrischen Schaltplan eines elektrischen Systems,
- Fig. 4a: einen schematischen Längsschnitt durch ein Schienenfahrzeug,
- Fig. 4b: eine schematische Draufsicht auf das in Fig. 4a dargestellte Schienenfahrzeug und
- Fig. 5: einen schematischen elektrischen Schaltplan eines elektrischen Systems in einer weiteren Ausführungsform.

Nachfolgend bezeichnen gleiche Bezugszeichen Elemente mit gleichen oder ähnlichen Merkmalen.

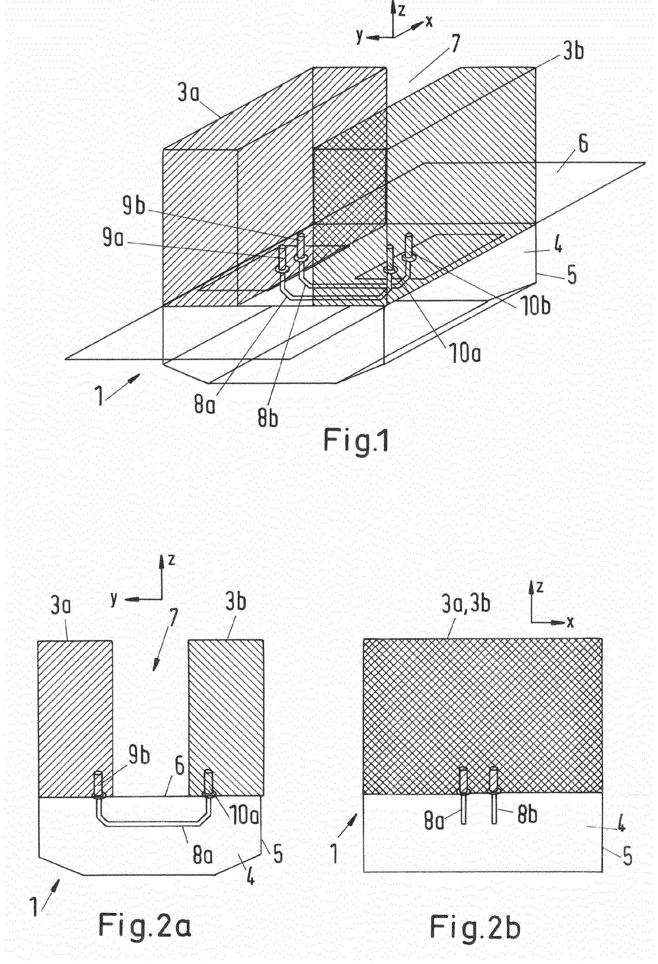

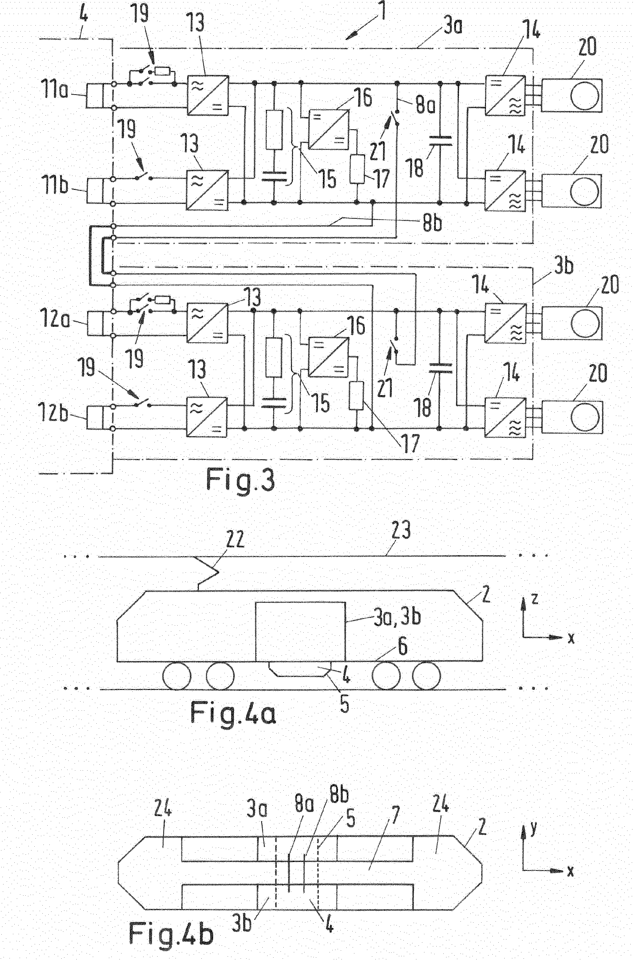

In Fig. 1 ist eine perspektivische Ansicht eines elektrischen Systems 1 eines Schienenfahrzeugs 2 (siehe z.B. Fig. 4a) dargestellt. Das elektrische System 1 umfasst einen ersten Stromrichter 3a und einen zweiten Stromrichter 3b. Hierbei sind der Übersichtlichkeit halber nur Gehäuse der Stromrichter 3a, 3b und keine weiteren Bauteile der Stromrichter 3a, 3b dargestellt. Elektrische Bauteile und Verbindungen der Stromrichter 3a, 3b werden in Bezug auf Fig. 3 näher erläutert.

Weiter umfasst das elektrische System 1 einen Transformator 4, wobei der Übersichtlichkeit halber ebenfalls nur ein Transformatorgehäuse 5 und keine weiteren Bauteile des Transformators 4 dargestellt ist. Nicht dargestellt sind z.B. eine Primär- und mehrere Sekundärwicklungen 11a, 11b, 12a, 12b des Transformators 4 (siehe Fig. 3).

Weiter dargestellt ist eine Bodenplatte 6 des Schienenfahrzeugs 2, wobei die Stromrichter 3a, 3b auf einer Oberseite der Bodenplatte 6 angeordnet sind. Der Transformator 4 ist an der Unterseite der Bodenplatte 6 angeordnet. Weiter dargestellt ist ein Koordinatensystem, wobei eine erste Achse parallel zu einer Längsachse des Schienenfahrzeugs 2, eine zweite Achse y parallel zu einer Querachse des Schienenfahrzeugs 2 und eine dritte Achse z parallel zu einer Vertikalachse des Schienenfahrzeugs 2 orientiert ist. Dargestellt ist, dass die Stromrichter 3a, 3b entlang der Vertikalrichtung z über dem Transformator 4 angeordnet sind. Entlang der Querrichtung y sind die Stromrichter 3a, 3b beabstandet voneinander angeordnet. Somit wird zwischen den Stromrichtern ein Mittelgang 7 ausgebildet. Insbesondere können Stromrichter 3a, 3b an gegenüberliegenden Längsseiten des Mittelgangs 7 angeordnet sein.

Weiter dargestellt ist eine erste elektrische Zwischenkreisverbindung 8a und eine zweite elektrische Zwischenkreisverbindung 8b.

Weiter dargestellt ist ein erster Anschluss 9a des ersten Stromrichters 3a für die erste elektrische Zwischenkreisverbindung 8a und ein zweiter Anschluss 9b des ersten Stromrichters 3a für die zweite elektrische Zwischenkreisverbindung 8b. Ebenfalls dargestellt ist ein erster elektrischer Anschluss 10a des zweiten Stromrichters 3b für die erste elektrische Verbindung 8a und ein zweiter Anschluss 10b des zweiten Stromrichters 3b für die zweite elektrische Zwischenkreisverbindung 8b. Mittels der ersten elektrischen Zwischenkreisverbindung 8a und den ersten elektrischen Anschlüssen 9a, 10a der Stromrichter 3a, 3b können Hochvoltabschnitte von Zwischenkreisabschnitten der Stromrichter 3a, 3b elektrisch verbunden werden. Mittels der zweiten elektrischen Zwischenkreisverbindung 8b und den zweiten Anschlüssen 9b, 10b der Stromrichter 3a, 3b können Niedervoltabschnitte der Zwischenkreisabschnitte der Stromrichter 3a, 3b verbunden werden.

Es ist dargestellt, dass die elektrischen Zwischenkreisverbindungen 8a, 8b durch das Transformatorgehäuse 5 geführt werden. Insbesondere können die Anschlüsse 9a, 9b, 10a, 10b für die elektrischen Zwischenkreisverbindungen an Unterseiten der Stromrichter 3a, 3b, insbesondere an Unterseiten deren Gehäuse oder Gerüste, angeordnet sein. Zumindest ein Teil der elektrischen Zwischenkreisverbindungen 8a, 8b kann jeweils Teil des Transformators 4 sein. Diese Zwischenkreisverbindungen 8a, 8b können durch eine Oberseite des Transformatorgehäuses 5 hindurch die Anschlüsse 9a, 9b, 10a, 10b der Stromrichter 3a, 3b kontaktieren.

Es ist selbstverständlich möglich, dass der Transformator 4 ebenfalls Anschlüsse zum Kontaktieren der Anschlüsse 9a, 9b, 10a, 10b der Stromrichter 3a, 3b aufweist.

In Fig. 2a ist ein schematischer Querschnitt durch das in Fig. 1 dargestellte elektrische System 1 dargestellt. Insbesondere ist ersichtlich, dass die elektrischen Zwischenkreisverbindungen 8a, 8b unter dem Mittelgang 7, insbesondere unter der Bodenplatte 6, durch das Transformatorgehäuse 5 geführt werden, um den Abstand von den Stromrichtern 3a, 3b entlang der zweiten Achse y (Querachse) zu überbrücken.

In Fig. 2b ist ein schematischer Längsschnitt durch das in Fig. 1 dargestellte elektrische System 1 dargestellt. Insbesondere ist ersichtlich, dass die elektrischen Zwischenkreisverbindungen 8a, 8b durch ein Innenvolumen des Transformatorgehäuses 5 geführt und somit in diesem Innenvolumen angeordnet sind.

Hierbei können die elektrischen Zwischenkreisverbindungen 8a, 8b durch ein Teil des Innenvolumens des Transformatorgehäuses 5 geführt werden, der mit Transformatoröl gefüllt ist. Somit können die elektrischen Zwischenkreisverbindungen 8a, 8b von Transformatoröl umgeben sein.

Die elektrischen Zwischenkreisverbindungen 8a, 8b, insbesondere der transformatorinterne Teil dieser Zwischenkreisverbindungen 8a, 8b, sind vorzugsweise als Stromschienen ausgebildet.

In Fig. 3 ist ein schematisches elektrisches Schaltbild eines elektrischen Systems gemäß der Erfindung dargestellt. Dargestellt ist insbesondere ein Transformator 4, ein erster Stromrichter 3a und ein weiterer Stromrichter 3b.

Der Transformator 4 umfasst Sekundärwicklungen 11a, 11b, 12a, 12b. Hierbei sind zwei Sekundärwicklungen 11a, 11b mit Eingangsanschlüssen des ersten Stromrichters 3a elektrisch verbunden. Zwei weitere Sekundärwicklungen 12a, 12b sind mit Eingangsanschlüssen des zweiten Stromrichters 3b verbunden.

Die Stromrichter umfassen jeweils zwei Netzstromrichter 13 und zwei Antriebsstromrichter 14. Zwischen Gleichspannungsanschlüssen der Netzstromrichter 13 und Gleichspannungsanschlüssen der Antriebsstromrichter 14 ist ein Zwischenkreisabschnitt der Stromrichter 3a, 3b angeordnet.

Weiter weisen die Stromrichter Filtereinrichtungen 15, einen Bremssteller 16 und einen Bremswiderstand 17 auf. Weiter weist jeder Stromrichter 3a, 3b einen Zwischenkreiskondensator 18 auf.

Ein erster Anschluss des Kondensators 18 ist mit einem Hochvolt-Abschnitt des Zwischenkreisabschnitts und ein weiterer Anschluss des Zwischenkreiskondensators 18 mit einem Niedervoltabschnitt des Zwischenkreisabschnitts verbunden.

Weiter dargestellt ist, dass die Stromrichter 3a, 3b jeweils Abtrenn- oder Wechselschalter 19 umfassen, die zur elektrischen Verbindung der Netzstromrichter 13 mit den Sekundärwicklungen 11a, 11b, 12a, 12b dienen. Im Fall von Wechselschaltern 19 können Wechselspannungsanschlüsse der Netzstromrichter 13 anstelle mit den Sekundärwicklungen 11a, 11b, 12a, 12b des Transformators 4 mit einer nicht dargestellten Wechselspannungsquelle, beispielsweise einem Generator, insbesondere einem Dieselgenerator, oder einer weiteren externen Energieversorgungseinrichtung, elektrisch verbunden werden.

Weiter dargestellt sind elektrische Antriebsmaschinen 20, die mit Wechselspannungsanschlüssen der Antriebsstromrichter 14 verbunden sind.

Die Netzstromrichter 13 können insbesondere elektrische oder elektronische Schaltelemente, insbesondere IGBT, umfassen. Weiter können die Netzstromrichter 13 als getaktete Hochsetzsteller oder Gleichrichter betrieben werden. Insbesondere dienen die Netzstromrichter 13 einer Energieversorgung des Zwischenkreisabschnitts. Auch können die Netzstromrichter 13 als Gleichrichter bei einem Anschluss einer Generatoreinrichtung an die Wechselspannungsanschlüsse der Netzstromrichter 13 betrieben werden. Abhängig vom Betriebspunkt können die Netzstromrichter 13 Energie in alle Richtungen, d.h. von dem Transformator 4 zu den Antriebsmaschinen 20 oder von den Antriebsmaschinen 20 zu dem Transformator, übertragen.

In einem Gleichstromsystem kann ein Netzstromrichter 13 als 2-Quadranten-Hochsetz- oder Tiefsetzsteller betrieben werden. Dieser kann ebenfalls Energie in beide Richtungen transportieren. Ebenso kann der Netzstromrichter 13 in diesem Fall zum Anschluss einer externen Energiespeichereinrichtung, beispielsweise einer nicht dargestellten Batterie, dienen.

Die Antriebsstromrichter 14 können ebenfalls elektrische oder elektronische Schaltelemente, beispielsweise IGBT, umfassen. Die Antriebsstromrichter 14 dienen zur Erzeugung eines frequenz- und spannungsgeregelten Dreiphasenstroms zum Betrieb der Antriebsmaschinen 20.

Nicht dargestellt ist ein Anschluss der Stromrichter 3a, 3b für Hilfsbetriebeeinrichtungen und ein Hilfsbetriebeumrichter.

Weiter dargestellt sind eine erste elektrische Zwischenkreisverbindung 8a und eine zweite elektrische Zwischenkreisverbindung 8b. Die erste elektrische Zwischenkreisverbindung 8a weist ein Schaltelement 21 auf.

Weiter dargestellt ist, dass jede Zwischenkreisverbindung 8a, 8b jeweils stromrichterinterne Teile oder Abschnitte umfasst, die in einem Gehäuse der Stromrichter 3a, 3b angeordnet sind. Weiter weist jede Zwischenkreisverbindung 8a, 8b auch einen transformatorinternen Teil oder Abschnitt auf, der in dem Transformatorgehäuse 5 angeordnet ist. Dargestellt ist weiter, dass die Zwischenkreisverbindung 8a, 8b keine Teile aufweist, die außerhalb eines Gehäuses der Stromrichter 3a, 3b und außerhalb des Transformatorgehäuses 5 angeordnet ist.

Mittels der Schaltelemente 21 ist die elektrische Zwischenkreisverbindung 8a, 8b zwischen den Zwischenkreisen der Stromrichter 3a, 3b herstellbar oder trennbar. Die Schaltelemente 21 können hierbei in einem stromrichterinternen Teil der ersten Zwischenkreisverbindung 8a, 8b angeordnet sein. Insbesondere kann eine Herstellung oder Trennung in Abhängigkeit von detektierten Betriebsszenarien vorgenommen werden.

Nicht dargestellt ist eine Steuereinrichtung zur Steuerung der Schaltelemente 21.

In Fig. 4a ist ein schematischer Längsschnitt durch ein Schienenfahrzeug 2, insbesondere eine Lokomotive, dargestellt. Dargestellt ist ein Stromabnehmer 22, über den eine nicht dargestellte Primärwicklung eines Transformators 4 (siehe z.B. Fig. 4) mit einer Hochspannungsleitung 23 eines Versorgungsnetzes elektrisch verbindbar ist.

Weiter dargestellt ist der Transformator 4 mit dem Transformatorgehäuse 5 sowie Stromrichter 3a, 3b des Schienenfahrzeuges 2. Somit umfasst das Schienenfahrzeug 2 ein elektrisches System, wie in Fig. 1 dargestellt.

Ebenfalls dargestellt ist eine Bodenplatte 6 des Schienenfahrzeugs 2. Somit ist ersichtlich, dass der Transformator 4 in einer Unterflur-Anordnung an dem Schienenfahrzeug 2 befestigt ist.

In Fig. 4b ist eine schematische Draufsicht auf einen Fahrzeuginnenraum des Schienenfahrzeugs 2 aus Fig. 4a dargestellt. Dargestellt sind Führerräume 24, die sich entlang der ersten Achse x an Enden des Schienenfahrzeugs 2 befinden. Die Führerräume 22 sind durch einen Mittelgang 7 verbunden, wobei sich der Mittelgang 7 entlang der Längsrichtung x erstreckt. In Querrichtung y neben dem Mittelgang sind die Stromrichter 3a, 3b angeordnet. Weiter ist ein Transformator 4 mit einem Transformatorgehäuse 5 gestrichelt dargestellt. Weiter dargestellt sind elektrische Zwischenkreisverbindungen 8a, 8b.

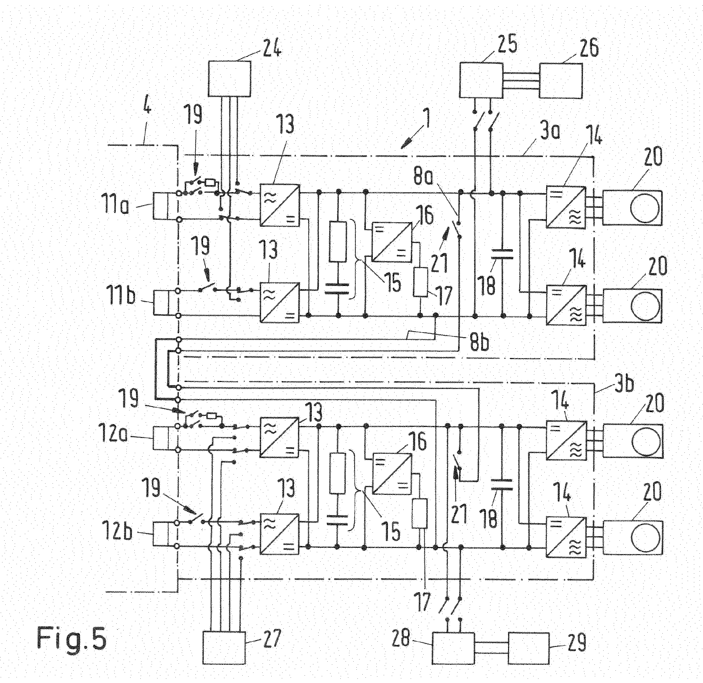

In Fig. 5 ist ein schematisches elektrisches Schaltbild eines elektrischen Systems gemäß einer weiteren Ausführungsform der Erfindung dargestellt.

Wie auch in Fig. 3 dargestellt, sind die Zwischenkreisabschnitte der Stromrichter 3a, 3b über die Netzstromrichter 13 und den Transformator 4 mit einem Versorgungsnetz elektrisch verbindbar.

Im Unterschied zu der in Fig. 3 dargestellten Ausführungsform sind in Fig. 5 eine Anzahl von weiteren Energiequellen dargestellt, mit denen die Zwischenkreisabschnitte der Stromrichter 3a, 3b elektrisch verbunden werden können.

So kann der Zwischenkreisabschnitt des ersten Stromrichters 3a über die Netzstromrichter 13 und entsprechende Schaltelemente mit einem Wechselstromgenerator 24 verbunden werden, wobei der Wechselstromgenerator 24 eine Energiequelle ausbildet.

Alternativ oder kumulativ kann der Zwischenkreisabschnitt des ersten Stromrichters 3a über einen Gleichrichter 25 und entsprechende Schaltelemente mit einem weiteren Wechselstromgenerator 26 verbunden werden, wobei der Wechselstromgenerator 26 ebenfalls eine Energiequelle ausbildet.

Weiter alternativ oder kumulativ kann der Zwischenkreisabschnitt des weiteren Stromrichters 3b über die Netzstromrichter 13 und entsprechende Schaltelemente mit einem Akkumulator 27 verbunden werden, wobei der weitere Akkumulator 27 ebenfalls eine Energiequelle ausbildet.

Weiter alternativ oder kumulativ kann der Zwischenkreisabschnitt des weiteren Stromrichters 3b über entsprechende Schaltelemente und über einen Gleichspannungswandler 28 mit einem weiteren Akkumulator 29 verbunden werden, wobei der weitere Akkumulator 29 ebenfalls eine Energiequelle ausbildet.

Es sind hierbei Ausführungsformen vorstellbar, in denen nur der Zwischenkreisabschnitt des ersten Stromrichters 3a mit einer oder mehreren solcher Energiequellen 24, 26, 27, 29 verbunden werden kann. Auch sind Ausführungsformen vorstellbar, in denen nur der Zwischenkreisabschnitt des weiteren Stromrichters 3b mit einer oder mehreren solcher Energiequellen 24, 26, 27, 29 verbunden werden kann.

Die Energiequellen 24, 26, 27, 29 können hierbei fahrzeugseitig montierte Energiequellen sein.

Ist, z.B. in einem entsprechenden Betriebsszenario, nur der Zwischenkreisabschnitt eines der Stromrichter 3a, 3b mit einer oder mehreren Energiequellen 24, 26, 27, 29 elektrisch verbunden, so kann die elektrischen Zwischenkreisverbindung 8a, 8b hergestellt werden.

### Bezugszeichenliste

- 1: elektrisches System
- 2: Schienenfahrzeug
- 3a, 3b: Stromrichter
- 4: Transformator
- 5: Transformatorgehäuse
- 6: Bodenplatte
- 7: Mittelgang
- 8a, 8b: elektrische Zwischenkreisverbindungen
- 9a, 9b: elektrische Anschlüsse
- 10a, 10b: elektrische Anschlüsse
- 11a, 11b: Sekundärwicklung des Transformators
- 12a, 12b: Sekundärwicklung des Transformators
- 13: Netzstromrichter
- 14: Antriebsstromrichter
- 15: Filtereinrichtung
- 16: Bremssteller
- 17: Bremswiderstand
- 18: Zwischenkreiskondensator
- 19: Schaltelemente
- 20: Antriebsmaschinen
- 21: Schaltelement
- 22: Stromabnehmer
- 23: Hochspannungsleitung
- 24: Wechselstromgenerator
- 25: Gleichrichter
- 26: weiterer Wechselstromgenerator
- 27: Akkumulator
- 28: Gleichspannungswandler
- 29: weiterer Akkumulator

## Patentansprüche

1. Schienenfahrzeug, wobei das Schienenfahrzeug (2) ein elektrisches System aufweist, wobei das elektrische System (1) einen ersten Stromrichter (3a), mindestens einen weiteren Stromrichter (3b) und mindestens einen Transformator (4), dessen Bauteile in einem Transformatorgehäuse (5) angeordnet sind, umfasst, wobei ein Zwischenkreisabschnitt des ersten Stromrichters (3a) mit einem Zwischenkreisabschnitt des mindestens einen weiteren Stromrichters (3b) durch mindestens eine elektrische Zwischenkreisverbindung (8a, 8b) elektrisch verbindbar ist, wobei über eine erste elektrische Zwischenkreisverbindung (8a) ein Hochvoltabschnitt des Zwischenkreisabschnitts des ersten Stromrichters (3a) mit einem Hochvoltabschnitt des Zwischenkreisabschnitts des mindestens einen weiteren Stromrichters (3b) verbindbar ist, wobei über eine weitere elektrische Zwischenkreisverbindung (8b) ein Niedervoltabschnitt des Zwischenkreisabschnitts des ersten Stromrichters (3a) mit einem Niedervoltabschnitt des Zwischenkreises des mindestens einen weiteren Stromrichters (3b) verbindbar ist,
**dadurch gekennzeichnet, dass**
der erste und der mindestens eine weitere Stromrichter (3a, 3b) zumindest entlang einer Raumrichtung beabstandet voneinander angeordnet sind, wobei zumindest ein Teil des Transformators (4) entlang der zumindest einen Raumrichtung zwischen dem ersten und dem mindestens einen weiteren Stromrichter (3a, 3b) angeordnet ist und wobei zumindest ein Teil der elektrischen Zwischenkreisverbindung (8a, 8b) durch ein Innenvolumen oder entlang einer Außenwand des Transformatorgehäuses (5) geführt ist.

2. Schienenfahrzeug nach Anspruch 1, **dadurch gekennzeichnet, dass** zumindest ein Teil der elektrischen Zwischenkreisverbindung (8a, 8b) als Stromschiene ausgebildet ist.

3. Schienenfahrzeug nach einem der vorangegangenen Ansprüche, **dadurch gekennzeichnet, dass** zumindest ein Teil der elektrischen Zwischenkreisverbindung (8a, 8b) als Kabel ausgebildet ist.

4. Schienenfahrzeug nach einem der vorangegangenen Ansprüche, **dadurch gekennzeichnet, dass** zumindest ein Teil der elektrischen Zwischenkreisverbindung (8a, 8b) elektrisch isoliert ist.

5. Schienenfahrzeug nach einem der vorangegangenen Ansprüche, **dadurch gekennzeichnet, dass** zumindest ein Teil der elektrischen Zwischenkreisverbindung (8a, 8b) von einem Isolationsmaterial des Transformators (4) umgeben ist.

6. Schienenfahrzeug nach Anspruch 5, **dadurch gekennzeichnet, dass** das Isolationsmaterial ein Transformatoröl ist.

7. Schienenfahrzeug nach einem der vorangegangen Ansprüche, **dadurch gekennzeichnet, dass** das Schienenfahrzeug (2) einen Mittelgang (7) aufweist oder ausbildet, wobei der Transformator (4) unter dem Mittelgang (7) angeordnet ist.

8. Schienenfahrzeug nach Anspruch 7, **dadurch gekennzeichnet, dass** zwischen einem Bodenelement des Mittelgangs (7) und zwischen einer Oberseite des Transformators (4) mindestens eine Kabelführungseinrichtung angeordnet ist, wobei die Kabelführungseinrichtung bündig an dem Bodenelement und bündig an der Oberseite anliegt.

9. Schienenfahrzeug nach einem der vorangegangenen Ansprüche, **dadurch gekennzeichnet, dass** zumindest einer der Stromrichter (3a, 3b) über dem Transformator (4) angeordnet ist.

10. Verfahren zum Betrieb eines elektrischen Systems eines Schienenfahrzeugs gemäß einem der Ansprüche 1 bis 9, **dadurch gekennzeichnet, dass** die elektrische Zwischenkreisverbindung (8a, 8b) der Zwischenkreisabschnitte des ersten Stromrichters (3a) und des mindestens einen weiteren Stromrichters (3b) hergestellt oder getrennt wird.

11. Verfahren nach Anspruch 10, **dadurch gekennzeichnet, dass** die elektrische Zwischenkreisverbindung (8a, 8b) hergestellt wird, wenn eine Eingangsleistung eines Zwischenkreisabschnitts eines Stromrichters (3a, 3b) von einer gewünschten Eingangsleistung abweicht und/oder wenn in dem Zustand einer nicht hergestellten Zwischenkreisverbindung (8a, 8b) nicht alle Zwischenkreisabschnitte der verbindbaren Stromrichter (3a, 3b) mit einer Energiequelle elektrisch verbunden sind und/oder wenn die Ströme durch mindestens zwei Sekundärwicklungen (11a, 11b, 12a, 12b) des Transformators (4) um mehr als ein vorbestimmtes Maß voneinander abweichen.

## Claims

1. Rail vehicle, said rail vehicle (2) comprising an electrical system, said electrical system (1) comprising a first power converter (3a),
5 at least one further converter (3b) and at least one transformer (4), the components of which are arranged in a transformer housing (5), wherein an intermediate circuit section of the first converter (3a) can be electrically connected to an intermediate circuit section of the at least one further converter (3b) by at least one electrical intermediate circuit connection (8a, 8b), wherein a high-voltage section of the intermediate circuit section of the first converter (3a) can be connected to a high-voltage section of the intermediate circuit section of the at least one further converter (3b) via a first electrical intermediate circuit connection (8a), wherein a low-voltage section of the intermediate circuit section of the first converter (3a) can be connected to a low-voltage section of the intermediate circuit of the at least one further converter (3b),
**characterized in that**
the first and the at least one further converter (3a, 3b) are arranged spaced apart from one another at least along a spatial direction, at least a part of the transformer (4) being arranged along the at least one spatial direction between the first and the at least one further converter (3a, 3b), and at least part of the electrical intermediate circuit connection (8a, 8b) being guided through an inner volume or along an outer wall of the transformer housing (5).

2. Rail vehicle according to claim 1, **characterized in that** at least part of the electrical intermediate circuit connection (8a, 8b) is designed as a busbar.

3. Rail vehicle according to any one of the preceding claims, **characterized in that** at least part of the electrical intermediate circuit connection (8a, 8b) is designed as a cable.

4. Rail vehicle according to any one of the preceding claims, **characterized in that** at least part of the electrical intermediate circuit connection (8a, 8b) is electrically insulated.

5. Rail vehicle according to any of the preceding claims, **characterized in that** at least a part of the electrical intermediate circuit connection (8a, 8b) is surrounded by an insulation material of the transformer (4).

6. Rail vehicle according to claim 5, **characterized in that** the insulation material is a transformer oil.

7. Rail vehicle according to one of the preceding claims, **characterized in that** the rail vehicle (2) has or forms a center aisle (7), the transformer (4) being arranged below the center aisle (7).

8. Rail vehicle according to claim 7, **characterized in that** at least one cable guide device is arranged between a floor element of the center aisle (7) and between an upper side of the transformer (4), wherein the cable guide device lies flush against the floor element and flush against the upper side.

9. Rail vehicle according to one of the preceding claims, **characterized in that** at least one of the converters (3a, 3b) is arranged above the transformer (4).

10. Method for operating an electrical system of a rail vehicle according to any one of claims 1 to 9, **characterized in that** the electrical intermediate circuit connection (8a, 8b) of the intermediate circuit sections of the first converter (3a) and of the at least one further converter (3b) is established or disconnected.

11. Method according to claim 10, **characterized in that** the electrical intermediate circuit connection (8a, 8b) is established when an input power of a intermediate circuit section of a power converter (3a, 3b) deviates from a desired input power and/or when, in the state of an unestablished intermediate circuit connection (8a, 8b) not all intermediate circuit sections of the connectable converters (3a, 3b) are electrically connected to a power source and/or if the currents through at least two secondary windings (11a, 11b, 12a, 12b) of the transformer (4) differ from each other by more than a predetermined amount.

## Revendications

1. Véhicule ferroviaire, le véhicule ferroviaire (2) comprenant un système électrique, le système électrique (1) comprenant un premier convertisseur (3a), au moins un autre convertisseur (3b) et au moins un transformateur (4), dont les composants sont disposés dans un boîtier de transformateur (5), une section de circuit intermédiaire du premier convertisseur (3a) pouvant être reliée électriquement à une section de circuit intermédiaire de l'au moins un autre convertisseur (3b) par au moins une liaison électrique de circuit intermédiaire (8a, 8b), une section à haute tension de la section de circuit intermédiaire du premier convertisseur (3a) pouvant être reliée à une section à haute tension de la section de circuit intermédiaire de l'au moins un autre convertisseur (3b) par une première liaison électrique de circuit intermédiaire (8a), une section à basse tension de la section de circuit intermédiaire du premier convertisseur (3a) pouvant être reliée à une section à basse tension de la section de circuit intermédiaire de l'au moins un autre convertisseur (3b) par une autre liaison électrique de circuit intermédiaire (8b),
**caractérisé en ce que**
le premier et l'au moins un autre convertisseur (3a, 3b) sont disposés à une certaine distance l'un de l'autre au moins le long d'une direction spatiale, au moins une partie du transformateur (4) est disposée le long de l'au moins une direction spatiale entre le premier et l'au moins un autre convertisseur (3a, 3b), et au moins une partie de la liaison électrique de circuit intermédiaire (8a, 8b) est guidée traverse un volume intérieur ou longe une paroi extérieure du boîtier du transformateur (5).

2. Véhicule ferroviaire selon la revendication 1, **caractérisé en ce qu'**au moins une partie de la liaison électrique de circuit intermédiaire (8a, 8b) est conçue comme un rail conducteur.

3. Véhicule ferroviaire selon l'une des revendications précédentes, **caractérisé en ce qu'**au moins une partie de la liaison électrique de circuit intermédiaire (8a, 8b) est réalisée sous forme de câble.

4. Véhicule ferroviaire selon l'une des revendications précédentes, **caractérisé en ce qu'**au moins une partie de la liaison électrique de circuit intermédiaire (8a, 8b) est isolée électriquement.

5. Véhicule ferroviaire selon l'une des revendications précédentes, **caractérisé en ce qu'**au moins une partie de la liaison électrique de circuit intermédiaire (8a, 8b) est entourée par un matériau d'isolation du transformateur (4).

6. Véhicule ferroviaire selon la revendication 5, **caractérisé en ce que** le matériau d'isolation est une huile de transformateur.

7. Véhicule ferroviaire selon l'une des revendications précédentes, **caractérisé en ce que** le véhicule ferroviaire (2) présente ou forme un couloir central (7), le transformateur (4) étant disposé sous le couloir central (7).

8. Véhicule ferroviaire selon la revendication 7, **caractérisé en ce que** au moins un dispositif de guidage de câbles étant disposé entre un élément de fond de l'allée centrale (7) et entre une face supérieure du transformateur (4), le dispositif de guidage de câbles affleurant l'élément de fond et affleurant la face supérieure.

9. Véhicule ferroviaire selon l'une des revendications précédentes, **caractérisé en ce qu'**au moins un des convertisseurs (3a, 3b) est disposé au-dessus du transformateur (4).

10. Procédé de fonctionnement d'un système électrique d'un véhicule ferroviaire selon l'une quelconque des revendications 1 à 9, **caractérisé en ce que** la liaison électrique de circuit intermédiaire (8a, 8b) des sections de circuit intermédiaire du premier convertisseur (3a) et de l'au moins un autre convertisseur (3b) est établie ou est déconnectée.

11. Procédé selon la revendication 10, **caractérisé en ce que** la liaison électrique de circuit intermédiaire (8a, 8b) est établie lorsqu'une puissance d'entrée d'une section de circuit intermédiaire d'un convertisseur (3a, 3b) est différente d'une puissance d'entrée souhaitée et/ou si, dans l'état d'une liaison non établie de la
liaison de circuit intermédiaire (8a, 8b), toutes les sections de circuit intermédiaire des convertisseurs connectables (3a, 3b) ne sont pas connectées électriquement à une source d'énergie et/ou lorsque les courants traversant au moins deux enroulements secondaires (11a, 11b, 12a, 12b) du transformateur (4) diffèrent de plus d'une mesure prédéterminée s'écartent.
